# FASCICULE DE BREVET EUROPEEN

(11) **EP 1 671 154 B1**
(45) Date de publication et mention de la délivrance du brevet: **15.04.2009**
(21) Numéro de dépôt: 04787255.1
(22) Date de dépôt: 29.09.2004
(51) Int. Cl.: G01S 13/78

(54) **PROCEDE ET DISPOSITIF DE FILTRAGE D'UN SIGNAL VIDEO RECU PAR UN RADAR SECONDAIRE, NOTAMMENT POUR ELIMINER LES REPONSES MODE S**
VERFAHREN UND EINRICHTUNG ZUM FILTERN EINES DURCH EINEN SEKUNDÄR-RADAR EMPFANGENEN VIDEOSIGNALS, INSBESONDERE ZUR BESEITIGUNG VON MODUS-S-ANTWORTEN
METHOD AND DEVICE FOR FILTERING A VIDEO SIGNAL RECEIVED BY A SECONDARY RADAR, PARTICULARLY IN ORDER TO ELIMINATE MODE S REPLIES

(30) Priorité: 10.10.2003 FR 0311894
(43) Date de publication de la demande: 21.06.2006
(73) Titulaire: Thales, 92200 Neuilly Sur Seine (FR)
(72) Inventeur: BILLAUD, Philippe, THALES Intellectual Property, F-94117 ARCUEIL (FR); DE VOLDER, Claude, THALES Intellectual Property, F-94117 ARCUEIL (FR)
(74) Mandataire: Lucas, Laurent Jacques
(86) Numéro de dépôt international: PCT/EP2004/052366
(87) Numéro de publication internationale: WO 2005/038487

(56) Documents cités:
- WO-A-02/082121
- FR-A- 2 692 995
- US-A- 5 063 386

## Description

L'invention concerne un procédé et un dispositif de filtrage d'un signal vidéo reçu par un radar secondaire, notamment pour éliminer les réponses mode S.

Un radar secondaire (connu encore sous le nom de radar interrogateur, radar de surveillance ou SSR - acronyme issu de l'expression anglo-saxonne "Secondary Surveillance Radar") est un dispositif qui envoie un train d'impulsions électromagnétique contenant un message d'interrogation. Le message d'interrogation est destiné à des transpondeurs (connus encore sous le nom de répondeurs radars) installés dans des véhicules porteurs tels que des avions ou des navires. Lorsqu'un transpondeur est dans le lobe d'émission du radar secondaire, il reçoit le message d'interrogation. II émet en retour un train d'impulsions électromagnétiques contenant un message de réponse. Le message de réponse, destiné au radar secondaire, peut contenir des données d'identification du véhicule porteur.

Les messages d'interrogation et de réponse sont codés selon des protocoles déterminés. Dans le domaine de l'aviation civile, on utilise de manière classique pour la surveillance aérienne des protocoles appelés modes A, B, C et D. Ces protocole sont définis par la norme de l'OACI (acronyme de "Organisation de l'Aviation Civile Internationale"). Pour la surveillance militaire, on utilise des protocoles appelés modes 1, 2, 3 et 4. Le protocole mode A est identique au protocole mode 3. Les modes 3/A et C sont utilisés pour le contrôle de la circulation aérienne.

Dans le mode A, les aéronefs (véhicules porteurs) sont identifiés par un code discret. Un code de quatre chiffres strictement inférieurs à 8 (codé sur 12 bits) est assigné à chaque aéronef, ces codes étant réassignables. Le nombre de codes différents est de 4096. II peut y avoir un conflit si deux aéronefs de même code se trouvent simultanément dans le lobe d'émission d'un radar secondaire

Avec l'augmentation du trafic aérien, le protocole des radars secondaires classique n'est plus adapté :
- le risque d'avoir un conflit est trop important ;
- des réponses de deux aéronefs situés à une même distance du radar secondaire peuvent se chevaucher (chevauchement synchrone); et
- un radar secondaire peut recevoir des réponses d'un aéronef, faites en réponse aux interrogations d'un autre radar secondaire (réponses asynchrone ou "fruit").

Afin de résoudre ces problèmes, l'OACI a défini un protocole appelé mode S. Dans ce protocole, les codes d'identification sont codés sur 24 bits, ce qui fait plus de 16 millions de codes d'identification différents. De plus, le mode S repose sur une procédure d'appel sélectif qui consiste à interroger un seul aéronef (parfaitement identifié) à la fois. Dans la suite de la description, les interrogations et les réponses classiques seront désignées par interrogations et réponses SSR.

La mise en oeuvre du protocole mode S nécessite de remplacer les transpondeurs existants par des transpondeurs d'un nouveau type. Les transpondeurs existants ne pouvant être remplacés simultanément, les nouveaux radars secondaires (capables d'interroger en mode S) sont compatibles avec les transpondeur classiques. A cet effet, les radars secondaires mode S interrogent aussi sur des modes classiques (interrogations SSR) entre des périodes mode S.

La forme des impulsions des réponses mode S étant identique à celles des réponses SSR, une partie des impulsions formant une réponse mode S peut être considérée à tort comme une réponse SSR par un radar secondaire. Ceci peut conduire à des fausses détections ou à saturer les traitements dans un radar secondaire fonctionnant en mode classique. Il peut être souhaitable alors, lorsqu'on cherche à détecter des réponses SSR, de filtrer les impulsions reçues pendant toute la durée d'une réponse mode S.

Cependant une réponse mode S peut chevaucher des réponses SSR, même si les aéronefs répondant en mode classique sont situés à des distances différentes. En effet, les interrogations et les réponses mode S sont beaucoup plus longues que les interrogations et les réponses SSR. En filtrant les impulsions pendant toute la durée d'une réponse mode S, on filtre aussi des réponses SSR.

Un but de l'invention est de filtrer les impulsions correspondant aux réponses mode S, tout en permettant de détecter des réponses SSR. Selon l'invention, lorsqu'on est en présence d'une réponse mode S, on filtre les impulsions sauf celles pouvant correspondre à des réponses SSR de plus forte puissance que la réponse mode S.

Il est connu du brevet FR 2 692 995 ayant pour titre "Procédé et dispositif de reconnaissance d'impulsions et utilisation pour le filtrage des réponses mode S d'un radar secondaire", un procédé de filtrage de réponse mode S. Cependant, ce procédé présente des limitations car il nécessite la détection et la reconnaissance d'impulsions.

De même, il est connu du brevet US 5,063,386 un dispositif de détection des signaux de répondeurs interrogés par un radar secondaire en présence de phénomènes de multitrajets. Ce dispositif, dont l'objet est d'améliorer exclusivement la réception des messages d'identification en mode S procède, dans le signal vidéo de réception LogΣ du radar secondaire, à la reconnaissance des impulsions composant le signal d'identification en mode S envoyé par le répondeur. Cette reconnaissance passe par une recherche dans le signal reçu des impulsions de formatage caractérisant ce mode d'identification. Ce dispositif met en oeuvre un procédé présentant des limitations analogues au procédé précédent car il nécessite également la détection et la reconnaissance d'impulsions.

Afin de filtrer des réponses mode S sans les limitations de l'art antérieur, l'invention a notamment pour objet un procédé de filtrage d'un signal vidéo, le signal vidéo étant reçu par un radar secondaire, le filtrage étant prévu pour précéder la détection de réponses SSR, le signal reçu comprenant des échantillons destinés à être analysés selon le procédé, procédé dans lequel pour un échantillon sous analyse :
- on estime au moins une puissance instantanée du signal reçu, la puissance étant estimée à partir d'échantillons de signal déterminés, lesdits échantillons étant au moins en avance ou en retard d'une durée supérieure à une durée T par rapport à l'échantillon sous analyse, la durée T étant la durée d'une réponse SSR ;
- on détermine un seuil, le seuil étant au moins égal à la puissance estimée ;
- si la puissance de l'échantillon sous analyse est inférieure au seuil, on filtre l'échantillon.

L'invention présente l'avantage d'utiliser des traitements simples à mettre en oeuvre, qui la rendent adaptée aux contraintes d'une exécution en temps réel. Par ailleurs, elle peut être mise en oeuvre de manière analogique, en utilisant des dispositifs simples tels que des lignes à retard, des comparateurs, ...

L'invention présente aussi l'avantage de permettre d'estimer la puissance d'une réponse à filtrer (mode S) sans avoir nécessairement d'impulsions claires. En effet, l'invention utilise directement des échantillons de signaux, et non des impulsions. Ainsi, l'invention peut être appliquée même lorsque des réponses à filtrer sont polluées par des multitrajets.

L'invention peut être appliquée sans jamais reconnaître une réponse SSR ou une réponse mode S, grâce à l'utilisation des échantillons et des spécificités des normes des signaux SSR et mode S. Elle permet notamment :
- d'éliminer des réponses mode S, non détectable en tant que réponse mode S (interférences multitrajets, chevauchement temporel avec d'autres réponses...), mais qui constitueraient une pollution importante pour un radar secondaire fonctionnant mode SSR ;
- de conserver les impulsions des réponses mode SSR, même si ces réponses ne sont pas détectées en tant que réponses SSR.

Ainsi, l'invention séparant le filtrage de la détection, il est possible d'effectuer des réglages séparés, dont une optimisation du filtrage et de la détection.

D'autres caractéristiques et avantages de l'invention apparaîtront à la lecture de la description détaillée suivante présentée à titre d'illustration non limitative et faite en référence aux figures annexées, lesquelles représentent :
- la figure 1, une réponse SSR (modes A et C) ;
- la figure 2, une réponse mode S ;
- la figure 3, un exemple du début d'un message d'une réponse mode S ;
- la figure 4, un synoptique d'un exemple de procédé selon l'invention ;
- la figure 5a, un exemple de signal vidéo log sigma ;
- la figure 5b, le résultat d'un seuil crête réalisé sur 1,6 µs du signal vidéo log sigma représenté à la figure 5a ;
- la figure 5c, le résultat d'une moyenne glissante sur 4 échantillons du signal représenté à la figure 5b ;
- la figure 5d, un seuil élaboré à partir du signal représenté à la figure 5c ;
- la figure 5e, le résultat d'un filtrage selon l'invention appliqué au signal vidéo log sigma représenté à la figure 5a.

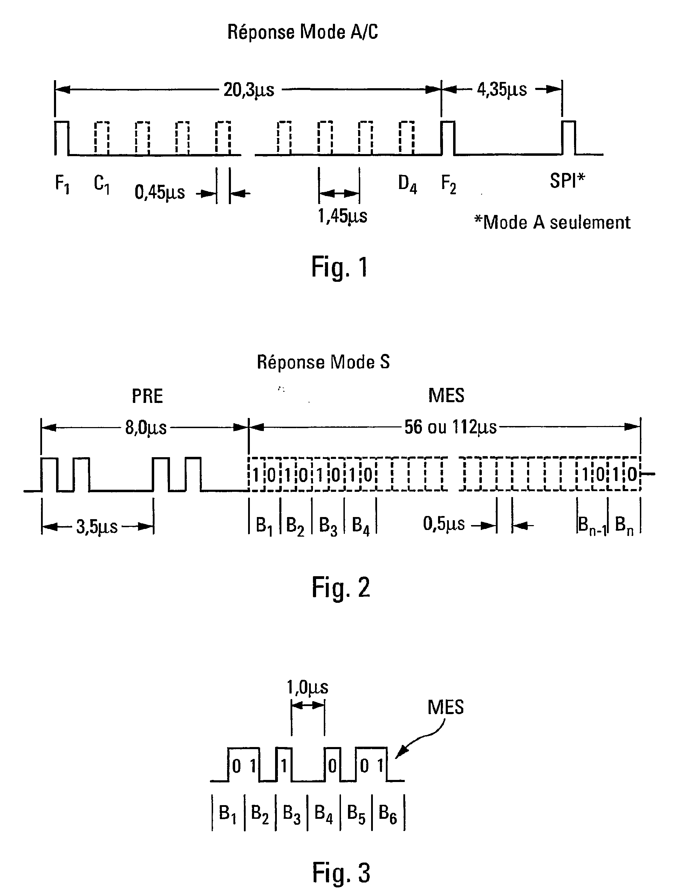

On se réfère maintenant à la figure 1 sur laquelle est représentée une réponse SSR mode A ou mode C. Une réponse SSR est formée par un train d'impulsions. Les impulsions de ce train ont une de largeur normalisée de 0,45 µs. Deux impulsions d'encadrement F₁, F₂, séparées de 20,3 µs sont émises en début et en fin de la réponse SSR. Des impulsions de message sont émises entre ces deux impulsions d'encadrement. La présence ou l'absence d'une impulsion de message à une position déterminée permet de coder pour une valeur binaire 1 ou 0. Dans les réponses mode A, une dernière impulsion appelée SPI (acronyme de l'expression anglo-saxonne "Special Pulse Indicator") peut être émise 4,35 µs après la dernière impulsion d'encadrement F₂. On pourra se référer à la norme OACI (Convention sur l'Aviation Civile Internationale - annexe 10 - volume IV) pour plus d'information sur les réponses SSR.

On se réfère maintenant à la figure 2 sur laquelle est représentée une réponse mode S. La réponse mode S comprend un préambule PRE et un message MES. Le préambule comprend quatre impulsions émises à des positions déterminées par la norme OACI, à laquelle l'homme du métier pourra se reporter. Le préambule est suivi du message MES. Le message MES permet de coder n valeurs binaires, référencées B₁, B₂ ... Bₙ. Selon le type de réponse (courte ou longue), le nombre de valeurs binaires n peut être 56 ou 112. Le codage utilisé est un codage en position. En d'autres termes, une impulsion est émise pour chaque valeur binaire de message, la position de cette impulsion en début ou en fin de période permettant de coder pour une valeur binaire 1 ou 0. Les impulsions de préambule et de message ont une largeur normalisée de 0,5 µs. Chaque valeur binaire du message est codée sur une période de 1 µs. Ainsi, le message d'une réponse mode S occupe 56 ou 112 µs.

On se réfère maintenant à la figure 3 sur laquelle est représenté un exemple du début d'un message d'une réponse mode S. Dans cet exemple, les premières valeurs binaires B₁ à B₆ sont respectivement 0, 1, 1, 0, 0, 1. Le temps maximum pendant lequel aucune impulsion est émise intervient lorsqu'une valeur 0 succède à une valeur 1 (entre B₃ et B₄). Ce temps est de 1 µs.

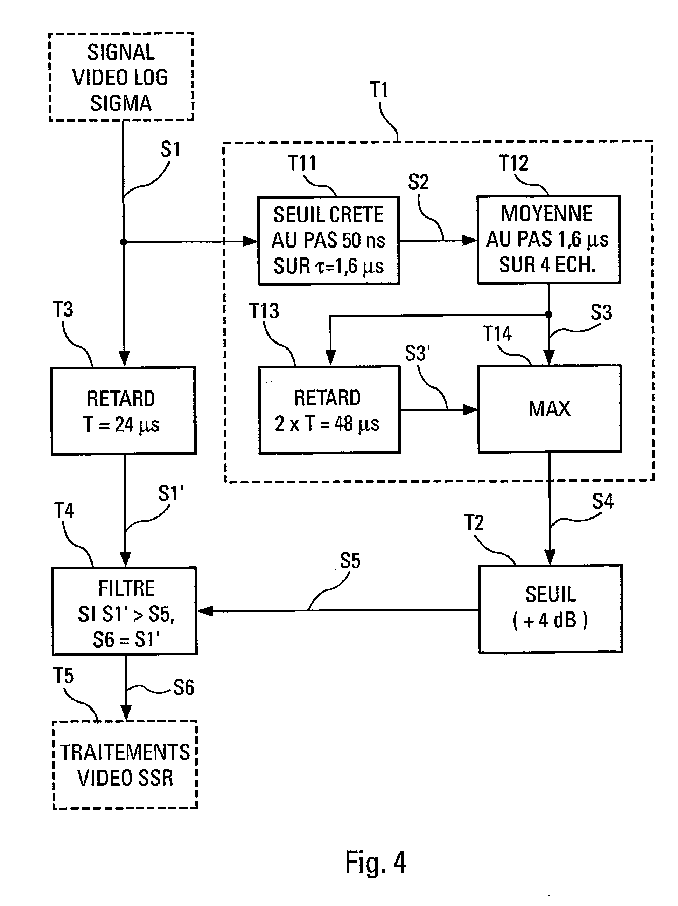

On se réfère maintenant à la figure 4 sur laquelle est représenté un exemple de mise en oeuvre de l'invention.

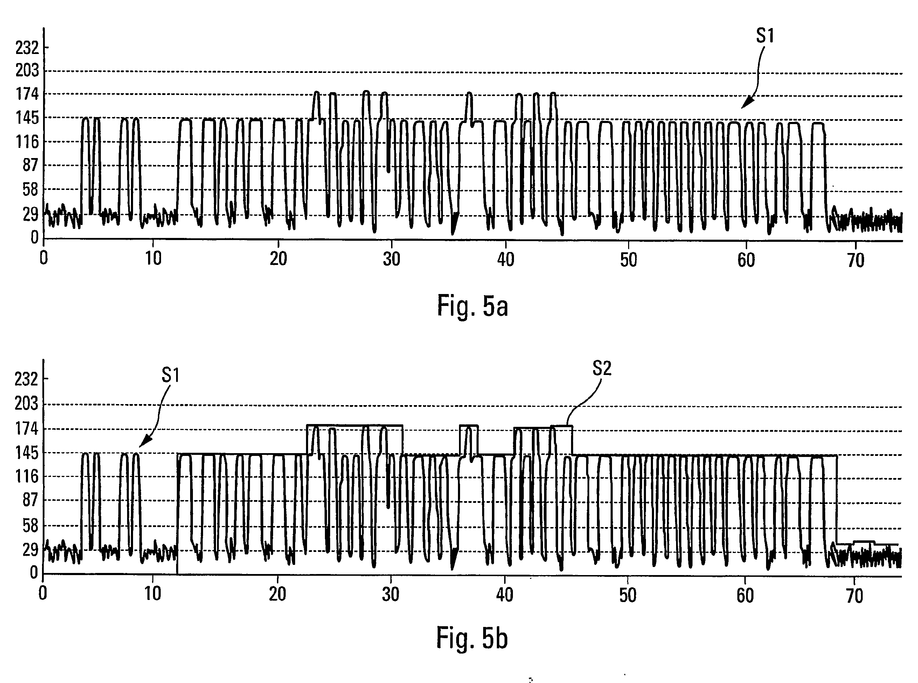

L'invention permet de traiter un signal d'entrée vidéo S1 d'un récepteur radar secondaire. Ce signal peut être analogique ou numérique. On décrit le procédé appliqué à un signal numérique. Le signal S1 peut être un signal amplifié par un amplificateur logarithmique, signal appelé de façon conventionnelle signal log vidéo. Le signal S1 peut être issu de n'importe quelle voie du radar. Par exemple le procédé peut être appliqué à la voie appelée de façon conventionnelle voie Sigma. Cette voie radar délivre un signal vidéo représentatif de l'amplitude du signal reçu dans le lobe principal de réception de l'antenne. Un exemple de signal S1 est représenté sur la figure 5a.

Avantageusement, le procédé selon l'invention est appliqué en parallèle et de manière indépendante à un autre signal vidéo radar (non représenté). Cet autre signal peut être issu d'une voie appelée de façon conventionnelle voie Delta. Le signal sur la voie Delta est représentatif de l'écart angulaire entre l'axe radioélectrique de l'antenne du radar et la position du transpondeur dans le lobe de l'antenne. La voie Sigma permet de distinguer deux signaux de puissances différentes. La voie Delta permet de distinguer deux signaux de même puissance (par exemple lors d'un chevauchement synchrone, connu encore sous le nom de "garbling" synchrone), mais dont les transpondeurs présentent un écart en position azimutale vis à vis du radar secondaire. Cet écart en azimut est alors transformé en écart en puissance sur la voie Delta, selon la fonction de transfert de l'antenne

Le signal d'entrée S1 est utilisé pour estimer, lors d'une étape T1, sa puissance instantanée. Cette estimation est réalisée à partir d'échantillons déterminés du signal S1. Ces échantillons sont au moins en avance ou en retard d'une durée supérieure à une durée T par rapport à l'échantillon sous analyse, la durée T étant la durée d'une réponse SSR. La durée T peut être de l'ordre de 24,6 µs (c'est à dire 20,3 µs pour la durée d'une réponse SSR conventionnelle plus 4,35 µs pour tenir compte de l'éventuelle présence d'une impulsion SPI).

Ainsi, si l'échantillon sous analyse est un échantillon de réponse SSR, les échantillons utilisés pour déterminer la puissance instantanée ne font pas partie de cette réponse. Ceci permet d'éviter que les échantillons de réponses SSR que l'on cherche à détecter ne contribuent à la détermination de la puissance instantanée.

Étant donné que le procédé est destiné à être utilisé en temps réel, il n'est pas possible d'appliquer directement un retard négatif pour utiliser des échantillons en avance par rapport à l'échantillon sous analyse. On applique donc un retard, lors d'une étape T3, aux échantillons sous analyse pour obtenir un signal S1' retardé par rapport à S1. Le retard appliqué à S1 pour obtenir S1' est au moins égal à T. Par exemple, on peut appliquer un retard sensiblement égal à T.

On décrit maintenant un mode de réalisation avantageux de l'invention pour l'étape T1. Cette étape T1 peut comporter des étapes T11, T12, T13, T14 telles que décrites ci-après.

Lors d'une première étape optionnelle T11, on détermine la valeur crête des échantillons de signal S1 reçus pendant une durée τ. La durée τ est au moins égale à la somme de la durée d'une impulsion et de la durée maximale d'absence de signal dans un message d'une réponse à filtrer. Lorsqu'on cherche à filtrer des réponses mode S, la durée maximale d'absence d'impulsion dans un message d'une réponse est de 1 µs. Une impulsion de message a une durée de 0,5 µs. Par conséquent, la durée τ est au moins égale à 1,5 µs. Par exemple, la durée τ peut être de 1,6 µs.

Lors de l'étape T11, on a besoin d'analyser des échantillons reçus pendant une fenêtre temporelle d'une durée τ. Ceci induit un retard dans la chaîne de traitement égal à τ/2 par rapport à l'échantillon sous analyse, si on souhaite que l'échantillon sous analyse soit au centre de la fenêtre. Afin de tenir compte de ce retard, on peut ajouter un retard τ/2 à l'échantillon sous analyse. En d'autres termes, on peut appliquer un retard τ/2 (non représenté) au signal S1' si on réalise l'étape T11.

L'étape T11 peut être appliquée de façon continue au signal S1. On peut par exemple l'appliquer à la cadence d'échantillonnage du signal S1, par exemple au pas de 50 nano-secondes. On obtient ainsi un signal S2, tel que représenté sur la figure 5b. Selon un mode de réalisation, on sous échantillonne le signal S2, en générant moins d'échantillon.

L'étape T11 permet de s'assurer, lorsqu'une réponse à filtrer est présente, que chaque échantillon de signal S2 est représentatif de la puissance d'une impulsion. On évite ainsi d'utiliser des échantillons de niveau faible, correspondant à une absence d'impulsion. En présence d'une réponse à filtrer, le signal S2 est représentatif de la puissance instantanée des impulsions de la réponse.

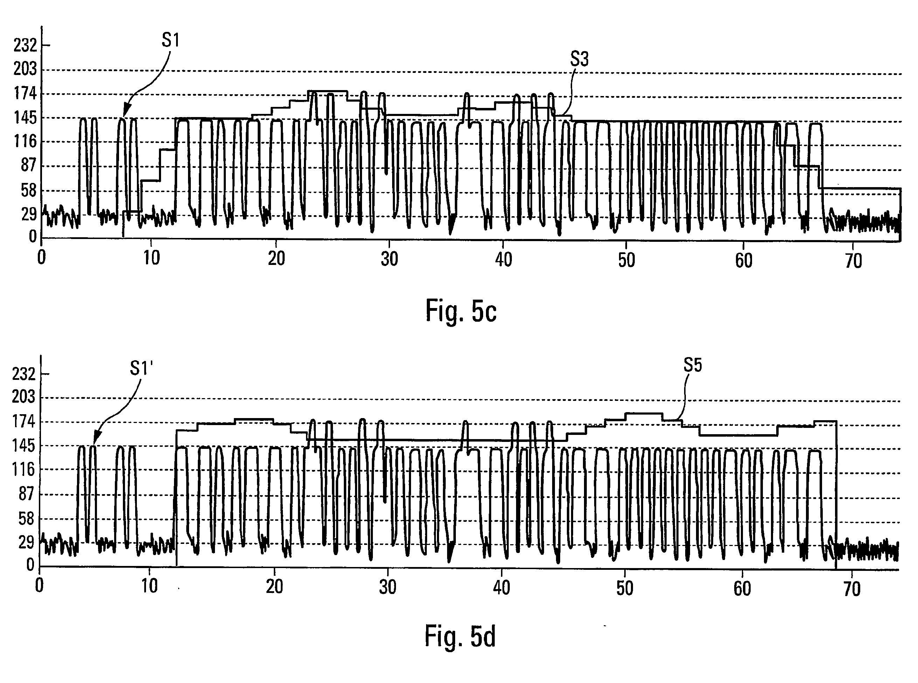

Lors d'une seconde étape optionnelle T12, on réalise une moyenne sur plusieurs échantillons du signal S2. Cette moyenne peut être réalisée sur quatre échantillons du signal S2 par exemple. Avantageusement, ces échantillons de signal S2 sont choisis de telle sorte que les échantillons de signal S1 à partir desquels ils ont étés élaborés soient distincts. En d'autres termes, on détermine lors de l'étape T12 la moyenne de plusieurs valeurs crêtes successives, les valeurs crêtes successives étant au moins séparées de la durée τ. Par "successives" il faut comprendre des valeurs prises en séquence avec un pas déterminé (correspondant au moins à la durée τ) parmi les échantillons de signal S2. On obtient ainsi un signal S3, tel que représenté sur la figure 5c.

Lors de l'étape T12, on a besoin d'analyser des échantillons reçus pendant une fenêtre temporelle d'une durée 4xτ. Ceci induit un retard dans la chaîne de traitement égal à 2xτ par rapport à l'échantillon sous analyse, si on souhaite que l'échantillon sous analyse soit au centre de la fenêtre. Afin de tenir compte de ce retard, on peut ajouter un retard 2xτ à l'échantillon sous analyse. En d'autres termes, on peut appliquer au signal S1' un retard τ/2+2xτ (non représenté) si on réalise les étapes T11 et T12.

L'étape optionnelle T12 permet de lisser les éventuels pics de signal qui peuvent intervenir en cas d'interférence appelée multi-trajet.

Les échantillons utilisés pour estimer la puissance instantanée de signal sont en avance par rapport à l'échantillon sous analyse. II est possible d'utiliser aussi des échantillons en retard par rapport à l'échantillon sous analyse. A cet effet, on peut appliquer un retard lors d'une étape optionnelle T13. Ce retard est égal au retard appliqué à l'étape T3 (c'est à dire T dans cet exemple), auquel on ajoute un retard supplémentaire au moins égal à T. Par exemple, on peut appliquer un retard sensiblement égal à 2xT lors de l'étape T13. On obtient alors un signal S3', retardé par rapport à S3. Lors d'une étape T14, on combine les signaux S3 et S3'. On obtient alors un signal S4 (issu de la combinaison), dans lequel on a utilisé à la fois des échantillons en avance et en retard par rapport à l'échantillon sous analyse.

Bien entendu, si l'étape optionnelle T12 n'est pas appliquée par exemple, on comprendra que le même traitement peut être réalisé en substituant le signal S2 au signal S3.

L'étape T14 au cours de laquelle les signaux S3 et S3' sont combinés peut consister par exemple à délivrer un signal S4 égal au maximum des deux signaux S3 et S3'. En prenant la valeur maximale des deux signaux, on évite des effets de bords lorsque l'échantillon sous analyse est au début ou à la fin du message de la réponse mode S à filtrer. Lorsqu'on est au début de la réponse à filtrer, le signal S3' sera basé sur des échantillons situés en dehors de la réponse (échantillons en retard, donc après l'échantillon sous analyse) alors que le signal S3 sera basé sur des échantillons situés dans la réponse (échantillons en avance, donc avant l'échantillon sous analyse). Inversement, lorsqu'on est à la fin de la réponse à filtrer, le signal S3 sera basé sur des échantillons situés en dehors de la réponse, alors que le signal S3' sera basé sur des échantillons situés dans la réponse. Par conséquent, au moins l'un des deux signaux S3 ou S3' est basé sur des échantillons situés dans la réponse à filtrer. En prenant le maximum des deux signaux, on conserve le signal basé sur des échantillons de la réponse à filtrer.

Ainsi, à l'issu de l'étape T1, c'est à dire des étapes T11, T12, T13, T14 dans le mode de réalisation décrit ci-dessus, on dispose d'un signal S4 qui est une estimation de la puissance instantanée du signal reçu correspondant à la réponse à filtrer. Si l'échantillon sous analyse est un échantillon d'une réponse SSR, les retards utilisés (étapes T13 et T3) évitent d'influencer cette estimation par des échantillons de ladite réponse SSR.

Ensuite, lors d'une étape T2 on détermine un seuil S5, ce seuil S5 étant au moins égal à la puissance estimée S4. Le seuil S5 peut être un signal élaboré en ajoutant une valeur constante au signal S4 ou une valeur proportionnelle au signal S4. Cette valeur peut être paramétrée en fonction du rapport signal à bruit du signal S1. On peut par exemple ajouter 4dB au signal S4 pour obtenir S5. On obtient ainsi un signal tel que représenté à la figure 5d.

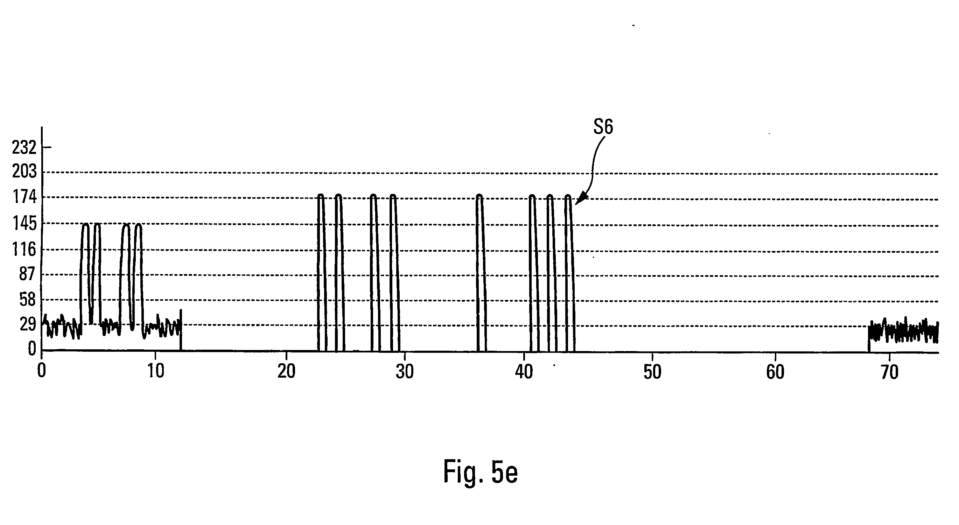

Lors d'une dernière étape, on compare les signaux S1' et S5. Si la puissance de l'échantillon sous analyse S1' est inférieure au seuil S5, on filtre l'échantillon. Sinon, on transmet l'échantillon de signal S1' aux traitements vidéo T5 des réponses SSR. On obtient ainsi un signal S6 tel que représenté à la figure 5e.

Lorsque l'invention est appliquée en parallèle sur les voies Sigma et Delta, on réalise avantageusement un OU après le procédé selon l'invention entre les signaux issus de chaque voie. Ainsi, si une réponse SSR n'a pas un niveau suffisant pour se détacher du message de la réponse à filtrer sur une voie (en dessous de 4dB de la puissance de la réponse mode S dans cet exemple de réalisation), elle peut avoir un niveau supérieur sur l'autre voie. On peut ainsi transmettre davantage de réponses SSR.

Bien entendu, l'invention ne se limite pas au traitement des réponses mode A ou C. Elle s'applique aussi au traitement des réponses mode 1 ou 2, qui ont des structures similaires. Elle s'applique aussi au traitement des réponses mode 4 (norme STANAG 4193), dont la structure est différente.

## Revendications

1. Procédé de filtrage d'un signal vidéo, le signal vidéo étant reçu par un radar secondaire, le filtrage étant prévu pour précéder la détection de réponses SSR, le signal reçu comprenant des échantillons destinés à être analysés selon le procédé, procédé dans lequel pour un échantillon sous analyse :
- on estime (T1) au moins une puissance instantanée (S4) du signal reçu, la puissance étant estimée à partir d'échantillons de signal déterminés, lesdits échantillons étant au moins en avance ou en retard d'une durée supérieure à une durée T par rapport à l'échantillon sous analyse, la durée T étant la durée d'une réponse SSR ;
- on détermine un seuil (S5), le seuil étant au moins égal à la puissance estimée ;
- si la puissance de l'échantillon sous analyse (S1') est inférieure au seuil, on filtre l'échantillon.

2. Procédé selon la revendication 1 dans lequel on estime au moins deux puissances instantanées, une première puissance instantanée étant estimée à partir d'échantillons situés en avance par rapport à l'échantillon sous analyse, une seconde puissance étant estimée à partir d'échantillons situés en retard par rapport à l'échantillon sous analyse, le seuil étant au moins égal au maximum des puissances instantanées estimées.

3. Procédé selon la revendication 1 ou 2 dans lequel on estime chaque puissance instantanée en utilisant la valeur crête des échantillons reçus pendant une durée τ, la durée τ étant au moins égale à la somme de la durée d'une impulsion et de la durée maximale d'absence de signal dans un message d'une réponse à filtrer.

4. Procédé selon la revendication 3 dans lequel on estime chaque puissance instantanée par la moyenne de plusieurs valeurs crêtes successives, les valeurs crêtes successives étant au moins séparées de la durée τ.

5. Procédé selon l'une quelconque des revendications précédentes, dans lequel la durée T est sensiblement égale à 24,6 µs.

6. Procédé selon la revendication 3, dans lequel les réponses à filtrer étant des réponses modes S, la somme de la durée d'une impulsion et de la durée maximale d'absence de signal est égale à 1,5 fois la période de modulation du message d'une réponse mode S.

7. Procédé selon l'une quelconque des revendications 3 à 6 dans lequel la durée τ est sensiblement égale à 1,6 µs.

8. Radar secondaire comprenant des moyens pour mettre en oeuvre un procédé selon l'une quelconque des revendications précédentes.

## Claims

1. Method for filtering a video signal, the video signal being received by a secondary radar, the filtering being designed to precede the detection of SSR responses, the received signal comprising samples intended to be analyzed according to the method, in which method for a sample under analysis :
- at least one instantaneous power (S4) of the received signal is estimated (T1), the power being estimated on the basis of determined signal samples, said samples at least leading or lagging by a duration greater than a duration T with respect to the sample under analysis, the duration T being the duration of an SSR response ;
- a threshold (S5) is determined, the threshold being at least equal to the estimated power ;
- if the power of the sample under analysis (S1') is less than the threshold, the sample is filtered.

2. Method according to Claim 1, in which at least two instantaneous powers are estimated, a first instantaneous power being estimated on the basis of samples that lead with respect to the sample under analysis, a second power being estimated on the basis of samples that lag with respect to the sample under analysis, the threshold being at least equal to the maximum of the estimated instantaneous powers.

3. Method according to Claim 1 or 2, in which each instantaneous power is estimated using the peak value of the samples received for a duration τ, the duration being at least equal to the sum of the duration of a pulse and of the maximum duration of absence of signal in a message of a response to be filtered.

4. Method according to Claim 3, in which each instantaneous power is estimated by averaging several successive peak values, the successive peak values being at least separated by the duration τ.

5. Method according to any one of the preceding claims, in which the duration T is substantially equal to 24.6 µs.

6. Method according to Claim 3, in which the responses to be filtered being mode S responses, the sum of the duration of a pulse and of the maximum duration of absence of signal is equal to 1.5 times the modulation period of the message of a mode S response.

7. Method according to any one of Claims 3 to 6, in which the duration τ is substantially equal to 1.6 µs.

8. Secondary radar comprising means for implementing a method according to any one of the preceding claims.

## Patentansprüche

1. Verfahren zum Filtern eines Videosignals, wobei das Videosignal von einem Sekundärradar empfangen wird, wobei die Filterung vorgesehen ist, um der Erfassung von SSR-Antworten vorauszugehen, wobei das empfangene Signal Tastproben enthält, die dazu bestimmt sind, gemäß dem Verfahren analysiert zu werden, wobei bei dem Verfahren für eine zu analysierende Tastprobe:
- mindestens eine Augenblicksleistung (S4) des empfangenen Signals geschätzt wird (T1), wobei die Leistung ausgehend von bestimmten Signaltastproben geschätzt wird, wobei die Tastproben mindestens um eine Dauer größer als eine Dauer T bezüglich der zu analysierenden Tastprobe voreilen oder verzögert sind, wobei die Dauer T die Dauer einer SSR-Antwort ist;
- ein Schwellwert (S5) bestimmt wird, wobei der Schwellwert mindestens gleich der geschätzten Leistung ist;
- wenn die Leistung der zu analysierenden Tastprobe (S1') unter dem Schwellwert liegt, die Tastprobe gefiltert wird.

2. Verfahren nach Anspruch 1, bei dem mindestens zwei Augenblicksleistungen geschätzt werden, wobei eine erste Augenblicksleistung ausgehend von Tastproben geschätzt wird, die sich bezüglich der zu analysierenden Tastprobe in Voreilung befinden, eine zweite Leistung ausgehend von Tastproben geschätzt wird, die sich bezüglich der zu analysierenden Tastprobe in Verzögerung befinden, wobei der Schwellwert mindestens gleich dem Maximum der geschätzten Augenblicksleistungen ist.

3. Verfahren nach Anspruch 1 oder 2, bei dem jede Augenblicksleistung geschätzt wird, indem der Spitzenwert der während einer Dauer τ empfangenen Tastproben verwendet wird, wobei die Dauer τ mindestens gleich der Summe der Dauer eines Impulses und der maximalen Dauer eines Signalausfalls in einer Mitteilung einer zu filternden Antwort ist.

4. Verfahren nach Anspruch 3, bei dem jede Augenblicksleistung durch den Mittelwert mehrerer aufeinanderfolgender Spitzenwerte geschätzt wird, wobei die aufeinanderfolgenden Spitzenwerte mindestens durch die Dauer τ getrennt sind.

5. Verfahren nach einem der vorhergehenden Ansprüche, bei dem die Dauer T im Wesentlichen gleich 24,6 µs ist.

6. Verfahren nach Anspruch 3, bei dem, da die zu filternden Antworten Modus-S-Antworten sind, die Summe der Dauer eines Impulses und der maximalen Dauer eines Signalausfalls gleich 1,5 Mal die Modulationsperiode der Mitteilung einer S-Modus-Antwort ist.

7. Verfahren nach einem der Ansprüche 3 bis 6, bei dem die Dauer τ im Wesentlichen gleich 1,6 µs ist.

8. Sekundärradar, der Einrichtungen aufweist, um ein Verfahren nach einem der vorhergehenden Ansprüche anzuwenden.
